# DEMANDE DE BREVET EUROPEEN

(11) **EP 1 039 592 A1**
(43) Date de publication de la demande: **27.09.2000**
(21) Numéro de dépôt: 99400730.0
(22) Date de dépôt: 25.03.1999
(51) Int. Cl.: H01S 3/036, H01S 3/0971, H01S 3/041

(54) **Procédé et dispositif pour l'excitation d'une décharge électrique à fréquence élevée dans un laser au gaz**

(71) Demandeur: Cinema Magnetique Communication ( C.M.C.), 92240 Malakoff (FR)
(72) Inventeur: Atejev, Vladimir, Moscow 142092 (RU)
(74) Mandataire: Picard, Jean-Claude Georges

(57) **Abrégé**

L'invention se rapporte au domaine de l'électronique quantique et peut être mise en oeuvre dans les lasers au gaz, tels que les lasers CO₂, à l'azote et les lasers à excimères.

Le procédé pour l'excitation de décharge haute fréquence dans un laser au gaz consiste à amener, en plus du courant de base de mélange gazeux du laser, dans la zone de sortie du gaz en provenance de l'espace entre les électrodes (1,2), un courant supplémentaire de mélange de gaz (6) refroidis électriquement neutres. Ceci permet une augmentation de la fréquence de succession des impulsions. Les particularités du dispositif pour la réalisation du procédé donné permettent d'accroître le coefficient d'efficacité du laser et d'en simplifier la construction.

## Description

L'invention proposée se rapporte au domaine de l'électronique quantique et peut être mise en oeuvre dans les lasers au gaz, comme par exemple les lasers N₂, CO₂ et les lasers à excimères.

On connaît un laser (Publication PCT WO 87/06773, cl. H01S 3/03), dans lequel on amène un courant de gaz supplémentaire dans l'espace intermédiaire entre les électrodes à travers des ouvertures dans l'une des électrodes.

Le procédé le plus proche de la solution du présent brevet se révèle être le procédé d'excitation d'une décharge à impulsions périodiques dans lequel, conjointement avec le courant de base de gaz, il est créé un courant supplémentaire entre les électrodes (Brevet USA 4152672, cl. H01S 3 / 03, 1979). Par le même document on connaît un dispositif destiné à sa mise en oeuvre, constitué par un circuit de passage de gaz dans lequel, devant l'espace entre les électrodes sont agencés des moyens pour la délivrance d'un courant supplémentaire de gaz à proximité de la limite de l'une des électrodes.

L'inconvénient de ce procédé et dispositif réside dans le fait que dans la zone de sortie des gaz traités ou usés provenant de l'espace entre les électrodes, des particules de plasma de la décharge gazeuse précédente qui ne sont pas complètement désionisées ainsi que des produits provenant de la corrosion des électrodes créent une conductivité élevée du gaz dans le sens aval du courant. Lors de l'application sur l'espace entre les électrodes des impulsions successives à tension élevée, entre les extrémités des électrodes dans la zone de sortie des gaz traités à partir de l'intervalle de décharge, ceci risque de provoquer des claquages ou décharges disruptives parasites dont la trajectoire passe par les volumes de gaz traités entraînés vers le bas. Pour éviter les claquages ou charges disruptives parasites précitées, la solution de l'art antérieur oblige à créer une vitesse élevée du courant gazeux. Etant donné que la puissance utilisée par les dispositifs de propulsion du gaz dans le cas d'une section constante de canal de gaz augmente de façon exponentielle par rapport à la vitesse du courant de gaz, avec l'accélération de la vitesse des gaz, le coefficient d'efficacité générale du laser chute sensiblement. Un autre inconvénient réside dans le fait qu'en traversant l'intervalle de décharge, le gaz cède une partie de sa chaleur aux électrodes et aux éléments disposés à proximité immédiate des électrodes tels que les conducteurs du courant gazeux, le conducteur de courant électrique de retour, ce qui risque de provoquer leur surchauffe et leur fusion.

Le but de la présente invention consiste à augmenter la fréquence de succession des impulsions et à améliorer le coefficient général d'efficacité du laser.
Pour atteindre ce but, le procédé d'excitation de la décharge électrique à fréquence élevée dans le laser au gaz consiste en ce qu'à travers l'espace entre les électrodes, il est créé un courant principal de mélange de gaz de travail et un courant supplémentaire de gaz électriquement neutre, ce courant supplémentaire étant amené dans la zone de sortie du courant principal de gaz en provenance de l'espace entre les électrodes et étant constitué par un mélange de gaz de travail refroidi.

L'amenée du gaz supplémentaire électriquement neutre directement dans la zone de sortie du courant principal provenant de l'intervalle de décharge permet de diluer avec un gaz neutre les gaz traités ou usés sortant de l'espace de décharge et qui n'ont pas été complètement désionisés, réduisant ainsi la concentration de particules chargées. Le gaz électriquement neutre est amené directement dans la zone de sortie du gaz provenant de l'espace entre les électrodes, et il pourra s'agir par exemple d'un gaz inerte ou d'un gaz faisant partie d'un mélange de gaz de travail. De cette manière, dans la zone précitée on assiste à une réduction de la conductivité. Cette réduction se produit en raison du fait que lors de la délivrance d'une impulsion à tension élevée sur les électrodes, il est créé un champ électrique non seulement dans la zone de décharge, mais également dans la zone de sortie des gaz usés ou traités provenant de l'espace entre les électrodes et, bien que l'intensité du champ électrique dans la zone de sortie des gaz en provenance de l'espace entre les électrodes soit plus faible que dans l'espace de décharge, en raison de la présence d'une conductivité résiduelle du gaz traité ou usé, une décharge parasite pourra néanmoins être déclenchée, concurrençant la décharge de propulsion qui est produite dans le milieu gazeux renouvelé, électriquement neutre. L'amenée d'un gaz électriquement neutre directement dans la zone de sortie d'un courant de gaz principal en provenance de l'espace entre les électrodes permet d'augmenter la fréquence seuil de génération de la décharge parasite dans la zone de sortie des gaz provenant de l'espace entre les électrodes. Par voie de conséquence, ceci permet également d'accroître la fréquence de la séquence des impulsions sans augmenter la vitesse du courant gazeux, améliorant ainsi le coefficient d'efficacité globale ou rendement du laser.

Le courant du gaz refroidi neutre est introduit dans la dernière partie de courant de la couche proche des électrodes, dans laquelle s'effectue l'apport d'énergie principal de la part de la décharge. Cette partie du courant renferme des produits de corrosion des électrodes, elle est la plus chauffée et pour cette raison, la délivrance d'un gaz refroidi neutre précisément dans la zone précitée diminue non seulement la conductivité du gaz et des surfaces délimitant le courant à la sortie de l'espace de décharge, mais empêche également la surchauffe des éléments du trajet de propulsion ou passage des gaz et l'accumulation de charges sur leurs surfaces, charges qui seraient susceptibles d'amplifier des champs électriques indésirables.

Le courant de gaz supplémentaire consiste judicieusement en un mélange de gaz de travail et par conséquent, pour sa formation, il n'est nullement besoin de recourir à une source de gaz supplémentaire.

Grâce au procédé proposé pour l'excitation d'une décharge électrique à haute fréquence dans un laser au gaz, on obtient comme résultat technique une augmentation de la fréquence de succession des impulsions et une amélioration du coefficient d'efficacité globale ou rendement du laser.

Le but de l'invention est aussi de mettre au point un dispositif permettant de réaliser le procédé proposé pour l'excitation d'une décharge électrique à fréquence élevée dans un laser au gaz.

Dans le dispositif pour la réalisation du procédé, comprenant un circuit de passage de gaz comportant deux électrodes formant un espace entre électrodes, un moyen de passage de gaz, un élément de radiation et au moins un canal de gaz supplémentaire, la sortie du canal de gaz supplémentaire est disposée directement dans la zone de sortie du mélange de gaz de travail provenant de l'espace entre les électrodes, l'entrée du canal de gaz supplémentaire communique avec la partie foulante du circuit de passage ou propulsion de gaz, et le canal de gaz supplémentaire est réalisé sous forme d'ouvertures traversantes, au moins dans une électrode, et un filtre à poussières est disposé dans le canal du courant supplémentaire.

De façon judicieuse, la sortie du canal de gaz supplémentaire est disposée directement dans la zone de sortie du mélange des gaz de travail provenant de l'espace intermédiaire entre les électrodes, permettant ainsi de réaliser le procédé proposé d'excitation de décharge électrique haute fréquence dans le gaz.

De façon judicieuse, l'entrée du courant de gaz supplémentaire est située dans la zone foulante du circuit de passage de gaz ; en effet, dans cette zone, la pression du gaz est supérieure à la pression dans la zone de sortie du gaz provenant de l'intervalle de décharge et cette différence de pression permet d'avoir un courant supplémentaire sans la mise en oeuvre de moyens de passage ou propulsion de gaz supplémentaires. En outre, dans la zone foulante le gaz est refroidi, étant donné que cette zone est située après l'échangeur thermique dans le sens du courant, c'est-à-dire qu'il n'est pas nécessaire de disposer de moyens supplémentaires pour le refroidissement du courant supplémentaire, ce qui simplifie la construction du laser.

La possibilité d'utilisation du mélange de gaz de laser pour le courant supplémentaire est liée au fait que le temps de recombinaison des particules chargées de plasma formées dans la zone de décharge est comparable à l'intervalle de temps entre des impulsions voisines dans le régime de travail du laser à fréquence élevée dans la succession des impulsions, mais que le temps de passage des particules par le circuit de passage du gaz est sensiblement plus important. Le gaz ionisé dans l'espace intermédiaire de décharge devient neutre au moment du passage de ces particules de gaz par le canal supplémentaire.

En particulier, dans le dispositif destiné à la réalisation du procédé proposé d'excitation de décharge gazeuse haute fréquence, le canal de gaz supplémentaire est exécuté sous forme d'orifices traversants, au moins dans une seule électrode. De cette manière, la surface de l'électrode qui est en contact avec le courant de gaz refroidi s'en trouve judicieusement agrandie, ce qui diminue la température de l'électrode. Ce fait permet de protéger l'électrode des risques de surchauffe et pour cette raison, réduit la corrosion de l'électrode et la dégradation du mélange gazeux. De surcroît, ceci simplifie la construction du canal supplémentaire.

En particulier, dans le dispositif destiné à la réalisation du procédé proposé de décharge gazeuse haute fréquence, un filtre à poussières de particules est disposé dans le canal du courant supplémentaire. Ceci est judicieux car il permet de réduire la quantité de particules chargées et améliore les propriétés isolantes du gaz, utilisé en tant que courant supplémentaire.

Les dispositifs proposés permettent de réaliser le procédé d'excitation de la décharge haute fréquence dans le laser au gaz et de simplifier la construction du laser.
La figure 1 montre schématiquement une coupe transversale du dispositif pour l'excitation d'une décharge haute fréquence dans le laser au gaz.
La figure 2 montre schématiquement une coupe transversale du dispositif dans le mode de réalisation d'un canal de gaz supplémentaire dans les électrodes.
La figure 3 montre schématiquement en coupe longitudinale le laser selon la figure 2, selon la ligne ┌ - ┌ avec les électrodes dans lesquelles sont pratiquées des ouvertures pour le canal de gaz supplémentaire.

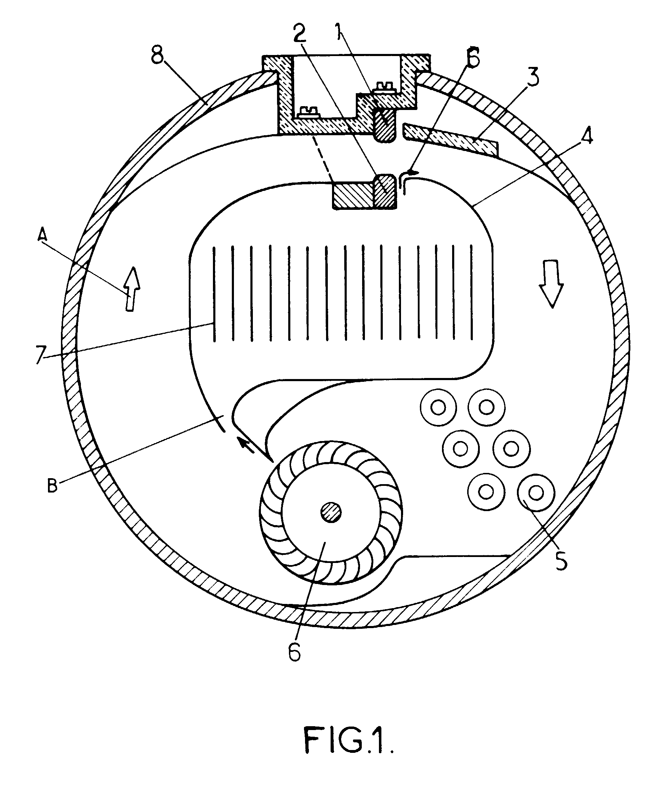

Le procédé proposé pour l'excitation de la décharge électrique haute fréquence dans le laser au gaz est illustré dans l'exemple d'un dispositif pour sa réalisation sur la figure 1. Les électrodes 1, 2 forment un espace intermédiaire entre les électrodes, à travers lequel on amène le courant de gaz de base, se déplaçant dans le sens A. L'application de la tension entre les électrodes 1,2 génère un champ électrique. Le champ électrique génère une décharge de gaz dans l'espace entre les électrodes.
Dans la zone de sortie des gaz traités provenant de l'espace entre les électrodes et ayant une conductivité élevée, il est délivré un courant de gaz supplémentaire 6, constitué par le gaz refroidi électriquement neutre. Le courant de gaz supplémentaire 6 peut être créé aussi bien à proximité de l'une des électrodes que simultanément auprès des deux électrodes 1, 2.

Si l'on augmente la tension entre les électrodes 1, 2 pour l'impulsion suivante, le champ électrique se propage également dans la zone du gaz porté et traité par l'impulsion précédente.
L'amenée du gaz supplémentaire, électriquement neutre, directement dans la zone de sortie du courant de base du gaz provenant de l'espace de décharge permet de diluer le gaz ionisé, traité, provenant de l'espace de décharge, avec un gaz neutre, ce qui augmente la résistance électrique de la trajectoire située au plus près de la décharge disruptive parasite. La trajectoire passe entre les jonctions des surfaces de travail et des surfaces latérales des électrodes par le biais du gaz ionisé de l'impulsion précédente.
Les surfaces du trajet de passage du gaz dans la zone 3, 4 située derrière les électrodes délimitant le courant de gaz total, sont directement baignées par le gaz refroidi électriquement neutre, ce qui augmente la résistance électrique desdites surfaces, mais si l'on fait appel à des conducteurs de courant de gaz réalisés en un matériau diélectrique, on empêchera l'accumulation de charges sur sa surface.

Le courant de gaz neutre refroidi 6 est introduit dans la partie du courant de base A, partie qui est passée par la zone proche des électrodes de décharge et dans laquelle s'effectue l'apport d'énergie principal de la part de la décharge. Cette partie du courant renferme des produits de corrosion des électrodes, elle est la plus chauffée et pour cette raison, la délivrance du gaz neutre refroidi précisément dans la zone mentionnée ci-dessus diminue non seulement de façon sensible la conductivité générale du gaz et des surfaces délimitant le courant, mais empêche la surchauffe des éléments du trajet de passage du gaz 3, 4, contigus à la zone de sortie de ce gaz en provenance de l'espace entre les électrodes.

Comme gaz pour le courant supplémentaire, on pourra utiliser du gaz inerte ou un gaz faisant partie du mélange des gaz de travail, c'est-à-dire les gaz qui n'ont pas d'influence sur la génération du laser.

La construction du laser représente une solution particulière du dispositif pour la réalisation du procédé proposé, construction dont une coupe transversale est montrée sur la figure 1. Le laser renferme les électrodes 1, 2, formant un espace entre électrodes, des conducteurs de courant de gaz 3, 4, formant un diffuseur, un radiateur 5 pour le refroidissement du mélange des gaz de travail, une ailette de ventilateur 6, un filtre à poussières 7 et un corps 8.

Le laser fonctionne en régime à impulsions périodiques. Le courant de gaz A est créé par l'ailette 6. En appliquant la tension sur les électrodes 1, 2, une décharge de gaz volumineuse est créée dans le domaine de la plus grande tension du champ électrique, c'est-à-dire dans l'espace entre les électrodes 1, 2. Le gaz ionisé à la sortie de l'espace entre les électrodes se mélange avec le gaz refroidi électriquement neutre du courant supplémentaire 6. Après le diffuseur, le gaz traverse le radiateur 5 où il est refroidi. L'entrée du canal du courant supplémentaire de gaz B est située dans la zone de haute pression du trajet de gaz et la sortie 6 se situe dans la zone de basse pression statique (de sorte que la vitesse du courant de base de gaz dans l'espace entre les électrodes est maximum). Pour cette raison, il n'est pas nécessaire de faire appel à des moyens supplémentaires de passage ou propulsion du gaz pour la création d'un courant supplémentaire.

Une partie du canal du courant supplémentaire est réalisée avec une grande superficie de section transversale et de ce fait, dans cette région, la vitesse des particules de gaz est élevée. Ceci permet d'obtenir un fonctionnement efficace pour les filtres à particules de poussières, par exemple pour le filtre électrostatique.

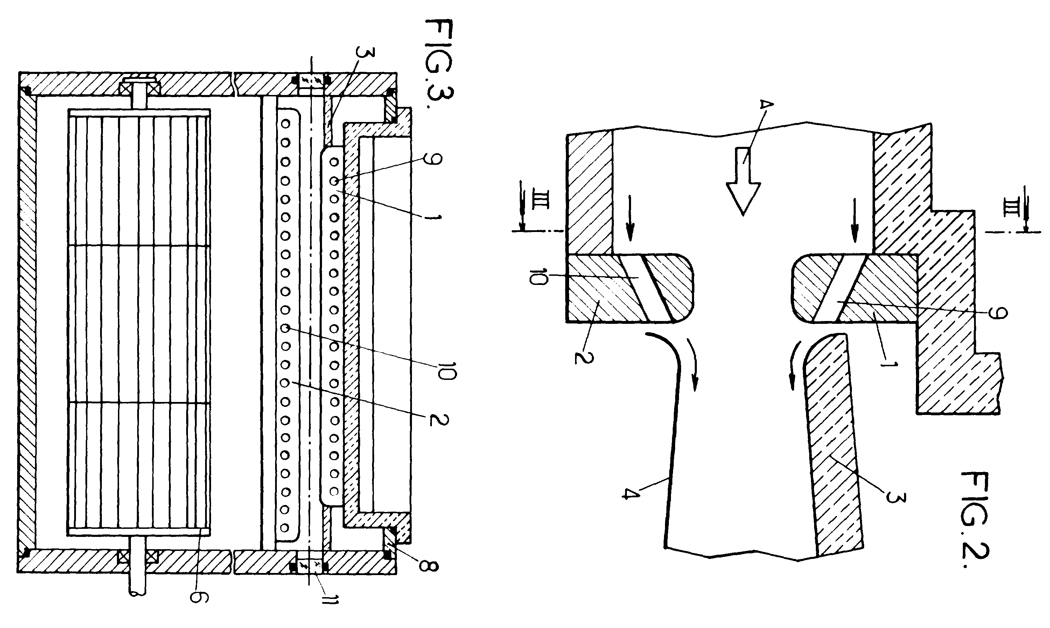

Une autre solution particulière d'un dispositif pour la réalisation du procédé proposé réside dans la construction du laser dont une section transversale est montrée schématiquement sur la figure 2, et dont une section longitudinale ┌ - ┌ est représentée sur la Figure 3. Le canal du courant supplémentaire est réalisé sous la forme d'ouvertures 9, 10 dans les électrodes 1, 2.

Le courant supplémentaire de gaz traverse les ouvertures 9, 10 des électrodes 1, 2. De cette manière, la superficie des électrodes qui se trouve en contact avec le courant de gaz refroidi est agrandie, ce qui réduit la température des électrodes. Ceci protège les électrodes de la surchauffe et par la même occasion, ceci permet de réduire la corrosion des électrodes et la dégradation du mélange gazeux. En outre, cette utilisation du canal supplémentaire simplifie la construction du laser. Le rayonnement ainsi généré sort par la fenêtre 11.

A titre d'exemple montrant la possibilité de réalisation pratique du dispositif proposé pour l'excitation d'une décharge électrique haute tension dans un laser au gaz, on peut présenter les résultats obtenus lors de l'expérimentation d'un laser N₂ à impulsions périodiques avec les paramètres suivants.

Mélange des gaz de travail : N₂ + He. La pression du mélange gazeux est de 0,6 atm. La distance entre les électrodes est de 10 mm. La largeur de l'espace ou intervalle de décharge est de 2,5 mm. La vitesse du courant gazeux à travers l'intervalle ou espace entre les électrodes est de 48 m/s.
Ceci permet de garantir une fiabilité de fonctionnement du laser à une fréquence de succession d'impulsions de 10 kHz.
En l'absence du courant supplémentaire, avec une vitesse de courant de gaz à travers l'espace entre les électrodes de 48 m/s, la fréquence maximum de succession des impulsions est de 6,5 kHz.

## Revendications

1. Procédé d'excitation d'une décharge électrique haute fréquence dans un laser gazeux, caractérisé en ce que dans l'intervalle entre les électrodes (1, 2) est créé un courant de base (A) d'un mélange de gaz de travail et un courant supplémentaire (B) de gaz neutre électriquement, caractérisé en ce que le courant de gaz supplémentaire est amené dans la zone de sortie du courant de gaz de base (A) en provenance de l'intervalle entre les électrodes (1, 2).

2. Procédé selon la revendication 1, caractérisé en ce que le courant supplémentaire (B) consiste en un mélange de gaz de travail refroidi.

3. Dispositif pour la réalisation du procédé selon la revendication 1, constitué par un circuit de passage de gaz comportant deux électrodes (1, 2) formant un intervalle entre électrodes, un moyen (6) de passage de gaz, un élément de radiation (5) et au moins un canal de gaz supplémentaire, caractérisé en ce que la sortie du canal de gaz supplémentaire est disposée directement dans la zone de sortie du mélange de gaz de travail provenant de l'intervalle entre les électrodes.

4. Dispositif selon la revendication 3, caractérisé en ce que l'entrée du canal de gaz supplémentaire communique avec la partie réchauffée du circuit de passage de gaz.

5. Dispositif selon les revendications 3 et 4, caractérisé en ce que le canal de gaz supplémentaire est réalisé sous forme d'ouvertures traversantes (9, 10) au moins dans une électrode.

6. Dispositif selon les revendications 3 et 4, caractérisé en ce que dans le canal du courant supplémentaire est disposé un filtre à poussières (7).
